# EUROPÄISCHE PATENTSCHRIFT

(11) **EP 1 030 254 B1**
(45) Veröffentlichungstag und Bekanntmachung des Hinweises auf die Patenterteilung: **01.06.2005**
(21) Anmeldenummer: 99103194.9
(22) Anmeldetag: 18.02.1999
(51) Int. Cl.: G06F 17/30

(54) **Verfahren und System zum Verwalten von Dokumenten**
Method and system to manage documents
Procédé et systeme de gestion de documents

(43) Veröffentlichungstag der Anmeldung: 23.08.2000
(73) Patentinhaber: sd&m Software design & management AG, 81737 München (DE)
(72) Erfinder: Schulz, Helge, 81739 München (DE); Scholz, Gero Dr., 61194 Niddatal Assenheim (DE); Hess, Andreas, 85521 Ottobrunn (DE); Brössler, Peter Dr., 81829 München (DE)
(74) Vertreter: Manitz, Finsterwald & Partner GbR

(56) Entgegenhaltungen:
- US-A- 5 649 192
- US-A- 5 708 828
- US-A- 5 809 317

## Beschreibung

Die vorliegende Erfindung betrifft ein Verfahren sowie ein System zum Erschließen und Verwalten von in elektronischer Form vorliegenden Dokumenten.

Seit der Einführung des Internets hat sich für die Verwaltung von Dokumenten in zunehmendem Maße das Hypertext Transfer Protokoll (HTTP) unter Verwendung des Hypertext Markup Language (HTML)-Formats durchgesetzt. Dabei erfolgt eine entsprechende Dokumentenverwaltung nicht nur im Rahmen des Internets, sondern auch in lokalen Anwendungen, wie beispielsweise auf der HTML-Sprache basierenden Hilfesystemen.

Kennzeichnend für diese Systeme ist es, daß von bestimmten, durch sogenannte Hyperlinks gekennzeichneten Bereichen der Dokumente Verweise zu Stellen in anderen oder auch denselben Dokumenten existieren, über die, beispielsweise durch Anklicken mit der Maus, eine Navigation zwischen unterschiedlichen Dokumenten und/oder darin befindlichen Bezugspunkten möglich ist.

Die Verweise sind dabei üblicherweise fest als relative oder absolute Pfade in den jeweiligen Dokumenten angegeben. Die durch diese Verweise definierte Struktur ist daher starr und unflexibel, da bei einer Änderung der Positionen der einzelnen Dokumente innerhalb des Dateisystems und/oder Verschiebung von Bezugspunkten innerhalb oder zwischen Dokumenten die Verweise jeweils geändert werden müssen.

Weiterhin ist lediglich eine einfache Punkt zu Punkt Navigation zwischen den Dokumenten möglich, eine weitergehende, komplexere Navigation, die bestimmte Eigenschaften von in den Dokumenten enthaltenen Informationsobjekten berücksichtigt, ist mit diesem System nicht möglich.

Es ist eine Aufgabe der vorliegenden Erfindung, ein Verfahren und ein System zum Erschließen und Verwalten von in elektronischer Form vorliegenden Dokumenten anzugeben, das flexibler als die bekannten Verfahren und Systeme einsetzbar ist.

Diese Aufgabe wird durch ein Verfahren gelöst, bei dem der Quellinhalt von in einem Quelldatenformat oder in mehreren Quelldatenformaten vorliegenden Dokumenten eines ersten Typs automatisch analysiert und in ein einheitliches Zieldatenformat konvertiert wird, wobei zumindest für einen Teil des Quellinhalts der Dokumente ersten Typs gemäß für das Quelldatenformat bzw. für die Quelldatenformate kennzeichnenden Beschreibungsregeln automatisch Kennzeichnungen generiert und diese zusammen mit zumindest einem Teil des Quellinhalts in dem Zieldatenformat als Dokumente zweiten Typs abgespeichert werden, zusätzlich diese Kennzeichnungen in einer Datenbank abgespeichert werden, und der in den Dokumenten zweiten Typs gespeicherte Quellinhalt über ein Hypertextsystem angezeigt wird, wobei zumindest ein Teil des Quellinhalts, für den Kennzeichnungen generiert wurden, als Hyperlinks angezeigt wird, die Information zur Dereferenzierung der Hyperlinks aus den in der Datenbank abgespeicherten Kennzeichnungen abgeleitet wird und zusätzlich über logikbasierte Anfrageelemente automatisch Dokumente eines dritten Typs erzeugt werden können, die über das Hypertextsystem angezeigt werden und Hyperlinks enthalten, die aus den in der Datenbank abgespeicherten Kennzeichnungen abgeleitet werden.

Ein erfindungsgemäßes System umfaßt eine Client-Server-Struktur, wobei der Server folgende Elemente umfaßt:
- eine Schnittstelle zum Übernehmen von in einem Quelldatenformat oder in mehreren Quelldatenformaten vorliegenden Dokumenten eines ersten Typs von dem Client,
- eine Analyse- und Konvertiereinheit zum automatischen Analysieren des Quellinhalts der Dokumente ersten Typs und zum Konvertieren des Quellinhalts in ein einheitliches Zieldatenformat, wobei durch die Analyse- und Konvertiereinheit zumindest für einen Teil des Quellinhalts der Dokumente ersten Typs gemäß für das Quelldatenformat kennzeichnenden Beschreibungsregeln automatisch Kennzeichnungen generierbar und diese zusammen mit zumindest einem Teil des Quellinhalts in dem Zieldatenformat als Dokumente zweiten Typs abspeicherbar sind,
- eine Datenbank und eine Extrahiereinheit zum Abspeichern dieser Kennzeichnungen in der Datenbank,
- und ein Hypertextsystem zum Anzeigen des in den Dokumenten zweiten Typs gespeicherten Quellinhalts, wobei zumindest ein Teil des Quellinhalts, für den Kennzeichnungen generiert wurden, als Hyperlinks anzeigbar sind, die Information zur Dereferenzierung der Hyperlinks aus den in der Datenbank abgespeicherten Kennzeichnungen ableitbar sind und zusätzlich über logikbasierte Anfrageelemente automatisch Dokumente eines dritten Typs erzeugbar sind, die über das Hypertextsystem anzeigbar sind und Hyperlinks enthalten, die aus den in der Datenbank abgespeicherten Kennzeichnungen ableitbar sind.

Erfindungsgemäß werden somit in beliebigen Quelldatenformaten vorliegende Dokumente, die in ihrer Gesamtheit als Dokumente eines ersten Typs bezeichnet werden, automatisch analysiert und in ein einheitliches Zieldatenformat konvertiert. Dieses einheitliche Zieldatenformat enthält dabei Kennzeichnungen für die in den Dokumenten ersten Typs enthaltenen Informationen und Beziehungen, durch die diese maschinell identifiziert und als Datenobjekte in eine Datenbank übernommen werden können. Diese Kennzeichnungen werden automatisch gemäß vorgegebenen Beschreibungsregeln erzeugt, die ebenfalls in Dokumenten abgespeichert sind und im folgenden auch als Metamodell bezeichnet werden.

Dieses Metamodell muß je nach gewünschten Quelldatenformaten einmalig definiert werden, so daß durch das Metamodell alle für die jeweiligen Dokumente relevanten Objekte und Beziehungen beschreibbar sind.

Das Metamodell basiert bevorzugt auf einer festen Elementspezifikation, die im weiteren auch als Meta-Metamodell bezeichnet wird, und ist basierend auf diesem Meta-Metamodell frei definierbar. Dadurch ist gewährleistet, daß innerhalb des Meta-Metamodells das Metamodell in beliebiger Weise definiert werden kann und eine Vielzahl von unterschiedlichen Dokument-, Objekt- und Beziehungstypen definiert und verwaltet werden können.

Wesentlich für die vorliegende Erfindung ist es, daß durch das definierte Metamodell die in den Dokumenten zweiten Typs generierten Kennzeichnungen automatisch extrahiert werden können und in einer Datenbank abgespeichert werden. Es werden somit nicht die Dokumente selbst und ihr struktureller Aufbau als Daten gespeichert, sondern die Meta-Daten als die in den Dokumenten beschriebenen Sachverhalte und die Beziehungen zwischen diesen Sachverhalten, die typisiert gemäß dem hinterlegten Metamodell gespeichert werden.

Der Zugriff auf die in den Dokumenten gespeicherten Informationen erfolgt dann über in den Dokumenten enthaltene Hyperlinks, wobei die Information zur Dereferenzierung der Hyperlinks aus den in der Datenbank abgespeicherten Kennzeichnungen abgeleitet wird. Die Navigation innerhalb der Dokumente erfolgt somit über die Dokumente selbst, wobei von den Stellen eines Dokuments, an dem Objekte bzw. Beziehungen beschrieben sind, diese Beziehungen als Hyperlinks unter Verwendung der in der Datenbank abgespeicherten Meta-Daten verfolgt werden können.

Mit dem erfindungsgemäßen Verfahren und dem erfindungsgemäßen System kann beispielsweise bei einer Mehrdeutigkeit eines über einen Hyperlink erreichbaren Zieles eine Auswahl von möglichen Zielen aufgeblendet werden, aus der das gewünschte Ziel auswählbar ist. Dabei ist es zusätzlich möglich, daß über logikbasierte Anfrageelemente automatisch Dokumente eines dritten Typs erzeugt werden, die über das Hypertextsystem angezeigt werden und wiederum Hyperlinks enthalten, die aus den in der Datenbank abgespeicherten Kennzeichnungen abgeleitet sind. Durch diese logikbasierte Anfrageelemente wird praktisch eine unbegrenzte Flexibilität bei der Formulierung möglicher Anfragen erreicht, die auf der Grundlage des frei konfigurierbaren Metamodells basiert.

Wahlweise können diese logikbasierten Anfragen dabei als Standardfragen vordefiniert sein oder auch als individuelle Anfragen in einer vorgegebenen Anfragesprache formuliert werden, um auf diese Weise eine noch größere Flexibilität zu erreichen.

Bevorzugt sind in der festen Elementspezifikation Deklarationen von Objekttypen, von Dokumenttypen und von Beziehungstypen definiert. Dieses feste Meta-Metamodell ist einerseits relativ einfach gehalten und andererseits trotzdem mächtig genug, eine Vielzahl von Sachverhalten beschreiben zu können.

Nach einer weiteren vorteilhaften Ausführungsform der Erfindung wird als Zieldatenformat das XML-(Extensible Markup Language)-Format verwendet. Bei dem XML-Format handelt es sich um ein standardisiertes Format, mit dem sehr flexibel Eigenschaften von Objekten und Beziehungen beschrieben werden können. Weiterhin ist es möglich, die in dem XML-Format vorliegenden Zieldokumente in das HTML (Hypertext Markup Language)-Format zu konvertieren, so daß die Navigation zwischen den Dokumenten mittels eines HTML-Browsers möglich ist und die HTML-Dokumente über einen Web-Server verwaltet werden können. Bei der Verwendung von XML-fähigen Browsern kann die Konvertierung nach HTML selbstverständlich entfallen.

Als Anfragesprache wird bevorzugt Prolog verwendet, das deterministische Antworten liefert und keine doppelten Ergebnissätze zurückgibt. Weiterhin wird als Datenbank vorteilhaft eine objektorientierte Datenbank verwendet, mit der Prolog eng gekoppelt zusammenarbeitet, so daß Objekte und Beziehungen nicht doppelt gespeichert werden müssen. Bei der Formulierung von individuellen Anfragen kann dabei auf Prolog-Prädikate zurückgegriffen werden, die direkt den Begriffen des Metamodells entsprechen.

Weitere vorteilhafte Ausführungsformen der Erfindung sind in den Unteransprüchen angegeben.

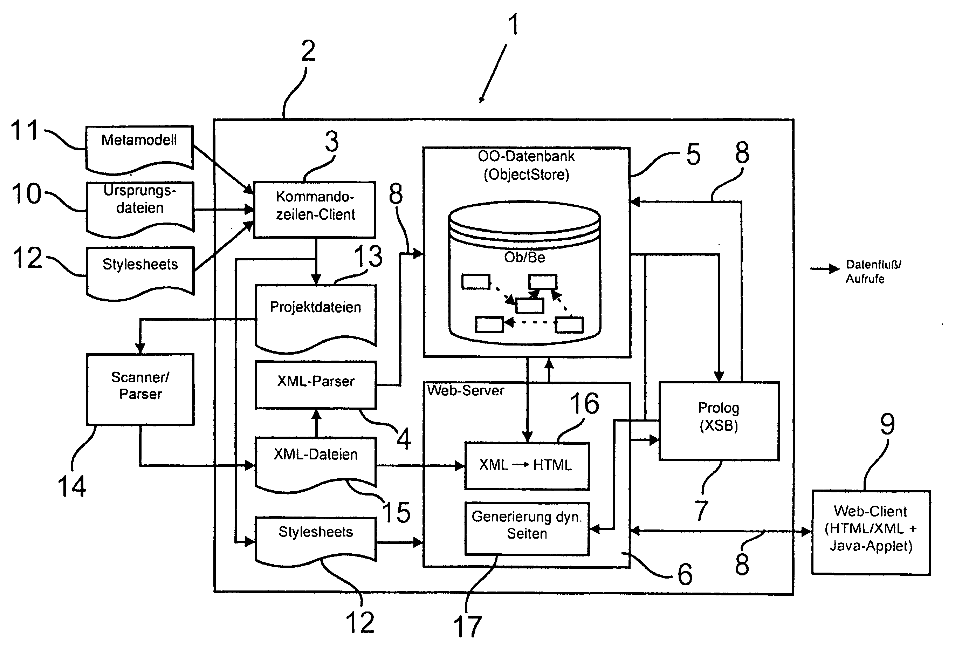

Die Erfindung wird nachfolgend anhand eines Ausführungsbeispiels unter Bezugnahme auf die einzige Figur näher beschrieben.

In der Figur ist das erfindungsgemäße Client/Server-System 1 in vereinfachter Form in einem Blockdiagramm dargestellt.

Das Client/Server-System 1 umfaßt eine Server-Instanz 2, die auf einer Server-Maschine läuft und sich von Clients unter einer bestimmten Netzwerkadresse ansprechen läßt. Dabei können eine Vielzahl von Server-Instanzen 2 gleichzeitig unter verschiedenen Netzwerkadressen unabhängig voneinander auf einem Rechner arbeiten.

Die Server-Instanz 2 umfaßt einen Kommandozeilen-Client 3, einen XML-Parser 4, eine objektorientierte Datenbank 5, einen erweiterten Web-Server 6 sowie ein Prolog-System 7, die untereinander Daten austauschen bzw. sich gegenseitig aufrufen, wie es durch eine Vielzahl von Pfeilen 8 dargestellt ist.

Weiterhin ist ein Web-Client 9 abgebildet, der auf einem Client-Rechner läuft und mit der Server-Instanz 2 ebenfalls Daten austauscht.

Mit 10 bezeichnete Ursprungsdateien bilden in einem oder in mehreren unterschiedlichen Quelldatenformaten vorliegende Dokumente eines ersten Typs, deren Inhalt in das erfindungsgemäße Client/Server-System 1 eingegeben wird. Beispiele für mögliche Dokumenttypen sind Computerprogramme, Personalstammblätter einer Personalverwaltung, Wörterbücher, Lexika oder dergleichen.

Für die Gesamtheit dieser Dokumenttypen existiert ein Metamodell 11, durch das die in den jeweiligen Dokumenttypen enthaltenen Informationen und Beziehungen beschrieben werden können.

Zusätzlich können je Dokumenttyp sogenannte Stylesheets 12 vorgesehen sein, durch die ein Anzeigelayout der Inhalte der Ursprungsdateien 10 definiert wird.

Die Ursprungsdateien 10, das Metamodell 11 und die Stylesheets 12 gelangen durch den Aufruf des Kommandozeilen-Clients 3 in die Server-Instanz 2. Dazu wird der Kommandozeilen-Client 3 in den jeweiligen Client-Rechner geladen und überträgt von dort die Ursprungsdateien 10, das Metamodell 11 und die Stylesheets 12 über das Netzwerk zum Server-Rechner, wo sie in einer Projektdokumentenablage als Projektdateien 13 abgelegt werden.

Damit die Inhalte der Ursprungsdateien 10 von der Server-Instanz 2 automatisch analysiert und erfaßt werden können, muß für jedes der verwendeten Quelldatenformate ein geeigneter Scanner/Parser 14 vorgesehen sein, durch den gemäß dem Metamodell 11 die Ursprungsdateien 10 in Dokumente eines zweiten Typs mit einem einheitlichen Zieldatenformat konvertiert werden können. Dieses Zieldatenformat kann beispielsweise das sogenannte XML-Format sein, so daß die in der Figur dargestellten XML-Dateien 15 erzeugt werden.

Bei dieser Konvertierung werden die in den Ursprungsdateien 10 enthaltenen Inhalte sowie die Beziehungen zwischen diesen Inhalten von dem Scanner/Parser 14 gemäß dem Metamodell 11 und gemäß dem XML-Nutzungskonzept markiert, so daß die abgespeicherten XML-Dateien 15 neben den ursprünglichen Inhalten der Ursprungsdateien 10 Kennzeichnungen dieser Inhalte enthalten.

Die auf diese Weise in einem einheitlichen Zieldatenformat vorliegenden XML-Dateien 15 werden durch den XML-Parser 4 untersucht, der anhand des Metamodells die automatisch erzeugten Kennzeichnungen aus den XML-Dateien 15 extrahiert und in die objektorientierte Datenbank 5 einträgt. Es werden somit nicht die Dokumenteninhalte selbst und ihr struktureller Aufbau in der Datenbank gespeichert, sondern ausschließlich die automatisch generierten Kennzeichnungen, welche die in den Dokumenten beschriebenen Sachverhalte und die Beziehungen zwischen diesen Sachverhalten gemäß dem hinterlegen Metamodell beschreiben.

Der gesamte Import der Ursprungsdateien 10 von seiner Übertragung auf den Server-Rechner bis zum Abspeichern in der Datenbank 5 ist unteilbar und erfolgt in einer Transaktion. Hat diese Transaktion Erfolg, so werden die XML-Dateien 15 in einer XML-Dateiablage für die Hypertextnavigation freigegeben. Schlägt die Transaktion fehl, so werden, falls vorhanden, die alte Projektdatei wiederhergestellt, die Datenbankänderung zurückgenommen und weiterhin die bisherigen XML-Dateien benutzt.

Liegen die Ursprungsdateien 10 bereits in dem Zieldatenformat, d.h. im Beispiel im XML-Format oder einem XML-konformen Format (beispielsweise HTML) vor, so werden die Inhalte der Ursprungsdateien von dem Parser 14 transparent weitergereicht bzw. lediglich eine Markierung der Objekte und Beziehungen durchgeführt. Enthalten Dokumente Graphiken oder ähnliche Elemente, so kann der Parser 14 in diesem Schritt die Ursprungsdateien 10 in mehrere Dateien zerlegen.

Die erzeugten XML-Dateien 15 werden dem erweiterten Web-Server 6 zugeführt, der Teil der Server-Instanz 2 ist. Der Web-Server 6 stellt die entsprechenden Hypertext-Navigationsmöglichkeiten bereit, so daß die XML-Dateien 15 über einen Hypertext-Browser angezeigt werden können. Handelt es sich bei dem Hypertext-Browser um einen HTML-Browser so wandelt der Web-Server 6 die in XML-Format vorliegenden Dateien beim Versenden an den Web-Client 9 online nach HTML um, wie es durch einen XML→HTML-Konverter 16 angedeutet ist. Der XML→HTML-Konverter 16 wandelt dabei nur die Kennzeichnungen in das HTML-Format um, die Objekte und Beziehungen laut des jeweiligen Metamodells 11 markieren. Dadurch wird ermöglicht, daß die Ursprungsdateien 10 im HTML-Format korrekt angezeigt werden. Weiterhin wird bei der Umwandlung eine besondere Markierung des Zielobjekts bei der Navigation erzeugt, so daß dieses bei der Anzeige über den Web-Client 9 hervorgehoben und vom Benutzer leichter auffindbar ist. Die Art der Hervorhebung wird dabei durch die Stylesheets 12 bestimmt, auf die die Dokumente verweisen und welche automatisch von dem Web-Client 9 abgerufen werden.

Der Web-Client 9 kann neben den Dokumenten auch Programmcode beispielsweise in Form von Java und/oder Javascript, enthalten, der Menüs und Dialoge realisiert, die zur Ausführung von Suchen sowie zur Definition und Ausführungen von Anfragen und dergleichen dienen.

Neben der Navigation innerhalb der Dokumente über die aus den in der Datenbank 5 gespeicherten Meta-Daten abgeleiteten Hyperlinks können logikorientierte Anfragen durch das Prolog-System 7 abgearbeitet werden. Dabei können die Anfragen in Form von Standardanfragen vorliegen, es kann bei der Formulierung der Anfragen aber auch auf Prolog-Prädikate zurückgegriffen werden, die direkt den Begriffen aus dem verwendeten Metamodell 11 entsprechen. Das Ergebnis einer solchen Anfrage ist dann ein Dokument 17 mit Verweisen auf Dokumentstellen, an denen die zum Anfrageergebnis gehörenden Objekte bzw. Beziechnungen definiert sind.

Erste Ergebnisse können dabei im Hypertext-Browser schon vor dem Ende der gesamten Anfragen angezeigt werden, da das Prolog-System 7 diese satzweise übergibt. Die Transaktionssteuerung erfolgt so, daß die Anfrage sich immer auf den Stand der Datenbank 5 bezieht, wie er beim Start der Anfrage vorlag.

Wie bereits erwähnt wurde, ist es für das erfindungsgemäße Verfahren und System wesentlich, daß zum einen ein festes Meta-Metamodell exisitert, auf dessen Basis ein frei konfigurierbares Metamodell zur Typisierung der Dokumenteninhalte definierbar ist. Dabei wird dieses Metamodell für die Gesamtheit der zu verwendenden Quelldatenformate entsprechend der in den Dokumenten gespeicherten, interessierenden Objekte und Beziehungen einmalig definiert und der automatischen Extraktion der Objekte und Beziehungen zugrundegelegt.

Eine mögliche Metamodellspezifikation besteht beispielsweise aus den folgenden drei Typen von Einträgen:
1. Deklaration von Dokumenttypen
2. Deklaration von Objekttypen
3. Deklaration von Beziehungstypen.

Die Deklaration von Dokumenttypen kann optionale Angaben von Dokumenttyp-Supertypen sowie die Information enthalten, ob Dokumente dieses Typs für die Volltextsuche indiziert werden. Diese Deklaration kann beispielsweise in der folgenden Notation erfolgen:
Dokumenttyp Dokumenttypname
   (ist (ein | eine) Dokumenttypname )*
   [ ist nicht volltextindizierbar ]

Dabei sind Alternativen "a oder b" dargestellt als (a | b), Teile die wiederholt werden können sind mit ()* gekennzeichnet, optionale Teile sind mit [] geklammert.

Die Deklaration von Objekttypen enthält optionale Angaben der Dokumenttypen, in denen sie definiert werden, sowie die optionale Angaben von Objekttyp-Supertypen in der Form
Objekttyp Objekttypname
( ist (ein | eine) Objekttypname )*
( ist definiert in Dokumenttypname )*

Die Deklaration von Beziehungstypen enthält die Angaben der Ziel-Resource, bzw. alle von diesen abgeleiteten Subtypen, und deren Kardinalitäten mit optionaler Angabe der Dokumenttypen, in denen sie definiert werden können und optionaler Angabe von Beziehungstyp-Supertypen. Diese kann formuliert werden als
Beziehungstyp Beziehungstypname [ alias Alias Name ]
von n1 bis n2| * Resourcetypname
nach m1 bis m2| * Resourcetypname
( ist Teilmenge von Beziehungstypname )*
( ist definiert in Dokumenttypname )*

Alle vorkommenden Typen müssen in genau einem Eintrag deklariert werden. Jeder Typ muß durch seinen Namen eindeutig gekennzeichnet sein, wobei Namen mit gleicher Buchstabenreihenfolge aber unterschiedlicher Groß/Kleinschreibung als gleich gelten und für Prolog die Anfangsbuchstaben der Namen ggf. in Kleinbuchstaben umgewandelt werden.

Zur weiteren Verdeutlichung ist im folgenden ein Ausschnitt eines Metamodells dargestellt:
Objekttyp Anwendungstyp
   - ist definiert in Quellcode: / / Objekte des Typs "Anwendungstyp"
   / / werden in Dokumenten
   / / des Typs "Quellcode" definiert
   - ist ein Typ: / / Vererbungsbeziehung
Beziehungstyp ändert
   - von Fähigkeit: / / Quelltyp
   - nach Attribut: / / Zieltyp
   - kommt vor in Quellcode: / / Beziehungen des Typs "ändert"
   / / kommen in Dokumenten
   / / des Typs "Quellcode" vor

Dieser Ausschnitt aus einer Metamodelldefinition sieht überführt in XML folgendermaßen aus, wobei die Teile, die unverändert aus der Eingabe übernommen wurden, fett dargestellt sind.

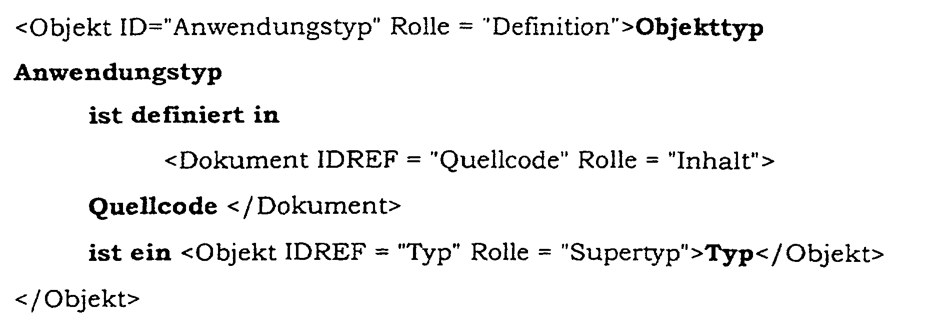

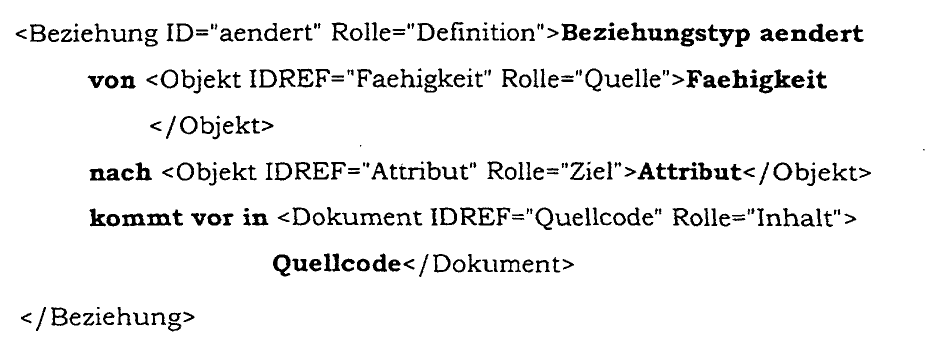

Die automatisch eingefügten Kennzeichnungen (in spitzen Klammern) dienen dazu, die im Dokument enthaltenen und für einen menschlichen Leser verstehbare Informationen für die weitere Verarbeitung explizit zu kennzeichnen und damit maschinell extrahierbar zu machen. Erfindungsgemäß werden lediglich die in den spitzen Klammern angegebenen Meta-Daten in der objektorientierten Datenbank gespeichert, während der außerhalb der spitzen Klammern vorhandene, eigentliche Dokumentinhalt nur für den menschlichen Leser gedacht ist. Die Dokumente werden in dem Dateisystem des Servers geordnet verwaltet und auf Anforderung an den Hypertext-Browser zur Anzeige übermittelt.

Als Anfragesprache dienen erfindungsgemäß Prolog-Ausdrücke mit der Semantik von erweitertem Datalog. Die Anfragen werden von dem Prolog-System 7 bearbeitet, das eng mit der objektorientierten Datenbank 5 gekoppelt ist, wobei die Anfragen die folgende Form besitzen:
- Anfrage: ::= Ausdruck '.'
- Ausdruck: ::= Term |
'**(**' Ausdruck '**)**' |
Ausdruck ( ',' | ';') Ausdruck
- Term: ::= Prädikat '(' Argument (',' Argument)* ')'
- Argument: ::= Variable | Konstante | '_'
- Variable: ::= '**A**' - '**Z**' ('**a**' - '**z**' | '**A**' - '**Z**' | '**0**' - '**9**' )*
- Konstante: ::= String | Zahl | Prädikat
- String: ::= ' ´' Zeichen* ' ´'

Dabei besitzt ein Semikolon die Bedeutung einer Disjunktion während das Komma die Bedeutung einer Konjunktion besitzt.
In einem Anfrageterm kann der Benutzer auf Prädikate zugreifen, die von dem Prolog-System selbst, durch selbst definierte Regeln, durch das Meta-Metamodell oder durch das Metamodell definiert sind. Prädikate sind spezielle Funktionen, deren Ergebnismenge nur aus den Wahrheitswerten "wahr" und "falsch" besteht, wobei sich als Argumente Konstanten oder sogenannte freie Variablen einsetzen lassen. Dabei ist auch die Verwendung einer universellen freien Variable als Platzhalter für uninteressante Dinge möglich (dargestellt durch'_').

Bei der Auswertung der Anfrage sucht das Prolog-System 7 alle möglichen Belegungen der freien Variablen heraus, bei denen der Anfrageausdruck insgesamt den Wahrheitswert "wahr" ergibt. Das Ergebnis besteht aus einer Liste der möglichen Belegungen, wobei jede Belegung in einer eigenen Zeile steht.

Handelt es sich bei den Werten um durch das Metamodell definierte Resourcen (Dokumente oder Objekte) so wird der Typ- und Resourcename als Hyperlink ausgegeben. Bei Beziehungen wird jeweils sowohl der Wert für Ziel als auch für Quelle als Hyperlink ausgegeben. Die Hyperlinks von einem Resourcennamen verweisen dabei wie üblich auf die Definitionsstelle des Objekts bzw. auf das Dokument.

Beispiele für Anfragen sind zur Verdeutlichung im folgenden aufgeführt:
- Welche Dokumente verwaltet die Server-Instanz?
   Anfrage: dokument (X).
- Welche Objekte vom Typ "C-Funktion" gibt es?
   Anfrage in Prolog: object (X, "C-Funktion", _).
   Anfrage als vordefiniertes Prädikat: c-Funktion (X, _).
- Welche Beziehungen vom Typ "ruft" gibt es?
   Anfrage in Prolog: relation (X, "ruft", _, _).
   Anfrage als vordefiniertes Prädikat: ruft (X, _, _).

### Bezugszeichenliste

- 1: Client/Server-System
- 2: Server-Instanz
- 3: Kommandozeilen-Client
- 4: XML-Parser
- 5: objektorientierte Datenbank
- 6: Web-Server
- 7: Prolog-System
- 8: Pfeile
- 9: Web-Client
- 10: Ursprungsdateien
- 11: Metamodell
- 12: Stylesheet
- 13: Projektdateien
- 14: Scanner/ Parser
- 15: XML-Dateien
- 16: XML→HTML-Converter
- 17: temporäre Dateien

## Patentansprüche

1. Verfahren zum Erschließen und Verwalten von in elektronischer Form vorliegenden Dokumenten, bei dem der Quellinhalt von in einem Quelldatenformat oder in mehreren Quelldatenformaten vorliegenden Dokumenten eines ersten Typs automatisch analysiert und in ein einheitliches Zieldatenformat konvertiert wird, wobei zumindest für einen Teil des Quellinhalts der Dokumente ersten Typs gemäß für das Quelldatenformat bzw. für die Quelldatenformate kennzeichnenden Beschreibungsregeln automatisch Kennzeichnungen generiert und diese zusammen mit zumindest einem Teil des Quellinhalts in dem Zieldatenformat als Dokumente zweiten Typs abgespeichert werden, zusätzlich diese Kennzeichnungen in einer Datenbank abgespeichert werden, und der in den Dokumenten zweiten Typs gespeicherte Quellinhalt über ein Hypertextsystem angezeigt wird, wobei zumindest ein Teil des Quellinhalts, für den Kennzeichnungen generiert wurden, als Hyperlinks angezeigt wird, die Information zur Dereferenzierung der Hyperlinks aus den in der Datenbank abgespeicherten Kennzeichnungen abgeleitet wird und zusätzlich über logikbasierte Anfrageelemente automatisch Dokumente eines dritten Typs erzeugt werden können, die über das Hypertextsystem angezeigt werden und Hyperlinks enthalten, die aus den in der Datenbank abgespeicherten Kennzeichnungen abgeleitet werden.

2. Verfahren nach Anspruch 1,
**dadurch gekennzeichnet,**
**daß** eine feste Elementspezifikation vorgegeben ist und daß die Beschreibungsregeln basierend auf der festen Elementspezifikation frei definierbar sind.

3. Verfahren nach Anspruch 2,
**dadurch gekennzeichnet,**
**daß** in der festen Elementspezifikation Deklarationen von Objekttypen, von Dokumenttypen und von Beziehungstypen definiert sind.

4. Verfahren nach Anspruch 1, 2 oder 3,
**dadurch gekennzeichnet,**
**daß** die Beschreibungsregeln in einem Dokument insbesondere ersten Typs abgespeichert sind.

5. Verfahren nach einem der vorhergehenden Ansprüche,
**dadurch gekennzeichnet,**
**daß** als Zieldatenformat das XML-(Extensible Markup Language)-Format verwendet wird.

6. Verfahren nach einem der vorhergehenden Ansprüche,
**dadurch gekennzeichnet,**
**daß** die in dem Zieldatenformat vorliegenden Dokumente von einem Hypertext-Server verwaltet und in einem Hypertext-Browser angezeigt werden, insbesondere daß die in dem Zieldatenformat vorliegenden Dokumente in das HTML-(Hypertext Markup Language)-Format umgewandelt, die erzeugten HTML-Dokumente von einem Web-Server verwaltet und in einem Web-Browser angezeigt werden.

7. Verfahren nach einem der vorhergehenden Ansprüche,
**dadurch gekennzeichnet,**
**daß** die logikbasierten Anfrageelemente als vorgegebene Standardanfragen definiert sind und/oder als individuelle Anfragen in einer vorgegebenen Anfragesprache formuliert werden.

8. Verfahren nach Anspruch 7,
**dadurch gekennzeichnet ,**
**daß** als Anfragesprache Prolog verwendet wird.

9. Verfahren nach einem der vorhergehenden Ansprüche,
**dadurch gekennzeichnet,**
**daß** als Datenbank eine objektorientierte Datenbank verwendet wird.

10. System zum Erschließen und Verwalten von in elektronischer Form vorliegenden Dokumenten (10), insbesondere für ein Verfahren nach einem der vorhergehenden Ansprüche, mit einer Client-Server-Struktur, wobei der Server (2) umfaßt
- eine Schnittstelle (3) zum Übernehmen von in einem Quelldatenformat oder in mehreren Quelldatenformaten vorliegenden Dokumenten (10) eines ersten Typs von dem Client,
- eine Analyse- und Konvertiereinheit (14) zum automatischen Analysieren des Quellinhalts der Dokumente (10) ersten Typs und zum Konvertieren des Quellinhalts in ein einheitliches Zieldatenformat, wobei durch die Analyse- und Konvertiereinheit (14) zumindest für einen Teil des Quellinhalts der Dokumente (10) ersten Typs gemäß für das Quelldatenformat kennzeichnenden Beschreibungsregeln (11) automatisch Kennzeichnungen generierbar und diese zusammen mit zumindest einem Teil des Quellinhalts in dem Zieldatenformat als Dokumente (15) zweiten Typs abspeicherbar sind,
- eine Datenbank (5) und eine Extrahiereinheit (4) zum Abspeichern dieser Kennzeichnungen in der Datenbank (5),
- und ein Hypertextsystem (6, 9) zum Anzeigen des in den Dokumenten (15) zweiten Typs gespeicherten Quellinhalts, wobei zumindest ein Teil des Quellinhalts, für den Kennzeichnungen generiert wurden, als Hyperlinks anzeigbar sind, die Information zur Dereferenzierung der Hyperlinks aus den in der Datenbank (5) abgespeicherten Kennzeichnungen ableitbar sind und zusätzlich über logikbasierte Anfrageelemente automatisch Dokumente (17) eines dritten Typs erzeugbar sind, die über das Hypertextsystem anzeigbar sind und Hyperlinks enthalten, die aus den in der Datenbank abgespeicherten Kennzeichnungen ableitbar sind.

## Claims

1. A method of accessing and managing documents present in electronic form, wherein the source content of documents of a first type present in one source data format or in a plurality of source data formats is automatically analysed and is converted into a uniform target data format, wherein codings are automatically generated at least for part of the source content of the documents of the first type in accordance with description rules which are characteristic for the source data format or for the source data formats and said codings are stored together with at least part of the source content in the target data format as documents of a second type, these codings are additionally stored in a database and the source content stored in the documents of the second type is displayed via a hypertext system, wherein at least part of the source text for which codings were generated is displayed as hyperlinks, the information for the dereferencing of the hyperlinks is derived from the codings stored in the database and, in addition, documents of a third type can be generated automatically via logic-based query elements, are displayed via the hypertext system and contain hyperlinks which are derived from the codings stored in the database.

2. A method in accordance with claim 1, **characterised in that** a fixed element specification is pre-set; and **in that** the description rules are freely definable on the basis of the fixed element specification.

3. A method in accordance with claim 2, **characterised in that** declarations of object types, of document types and of relation types are defined in the fixed element specification.

4. A method in accordance with claim 1, claim 2 or claim 3, **characterised in that** the description rules are stored in a document, in particular a document of a first type.

5. A method in accordance with any one of the preceding claims, **characterised in that** the XML (extensible mark-up language) format is used as the target data format.

6. A method in accordance with any one of the preceding claims, **characterised in that** the documents present in the target data format are managed by a hypertext server and are displayed in a hypertext browser; in particular **in that** the documents present in the target data format are converted into the HTML (hypertext mark-up language) format, the generated HTML documents are managed by a web server and are displayed in a web browser.

7. A method in accordance with any one of the preceding claims, **characterised in that** the logic-based query elements are defined as pre-set standard queries and/or are formulated as individual queries in a pre-set query language.

8. A method in accordance with claim 7, **characterised in that** Prolog is used as the query language.

9. A method in accordance with any one of the preceding claims, **characterised in that** an object-oriented database is used as the database.

10. A system for the accessing and managing of documents (10) present in electronic form, in particular for a method in accordance with any one of the preceding claims, comprising a client-server structure, with the server (2) including
- an interface (3) for taking over from the client documents (10) of a first type present in one source data format or in a plurality of source data formats;
- an analysis and conversion unit (14) for the automatic analysis of the source content of the documents (10) of the first type and for the conversion of the source content into a uniform target data format, wherein codings can be automatically generated by the analysis and conversion unit (14) at least for part of the source content of the documents (10) of the first type in accordance with description rules (11) which are characteristic for the source data format and said codings can be stored together with at least part of the source content in the target data format as documents (15) of a second type;
- a database (5) and an extraction unit (4) for the storing of these codings in the database (5);
- and a hypertext system (6, 9) for the display of the source content stored in the documents (15) of the second type, wherein at least part of the source content for which codings were generated can be displayed as hyperlinks, the information for the dereferencing of the hyperlinks can be derived from the codings stored in the database (5) and, in addition, documents (17) of a third type can be generated automatically via logic-based query elements, can be displayed via the hypertext system and contain hyperlinks which can be derived from the codings stored in the database.

## Revendications

1. Procédé pour exploiter et gérer des documents existants sous forme électronique, dans lequel le contenu source des documents d'un premier type existant dans un format de données source ou dans plusieurs formats de données source est analysé automatiquement et converti dans un format de données cible uniforme, moyennant quoi au moins pour une partie du contenu source des documents du premier type selon les règles de description caractéristiques du ou des format(s) de données source, des caractérisations automatiques sont générées et sont mémorisées conjointement avec au moins une partie du contenu source dans le format de données cible comme documents du deuxième type, ces caractérisations sont, en outre, mémorisées dans une base de données, et le contenu source enregistré dans les documents du deuxième type est affiché à l'aide d'un système d'hypertexte, moyennant quoi au moins une partie du contenu source, pour laquelle des caractérisations ont été générées, est affichée comme hyperliens, les informations de déréférenciation des hyperliens sont issues des caractérisations mémorisées dans la base de données, et des documents automatiques d'un troisième type peuvent également être générés via des éléments d'interrogation basés sur la logique, documents qui sont affichés via le système d'hypertexte et comportent des hyperliens qui sont issus des caractérisations mémorisées dans la base de données.

2. Procédé selon la revendication 1, **caractérisé en ce qu'**une spécification d'élément fixe est prédéfinie et **en ce que** les règles de description sont librement définissables en fonction de la spécification d'élément fixe.

3. Procédé selon la revendication 2, **caractérisé en ce que** dans la spécification d'élément fixe, des déclarations de types d'objets, de types de documents et de types de relation sont définies.

4. Procédé selon la revendication 1, 2 ou 3, **caractérisé en ce que** les règles de description sont mémorisées dans un document, plus particulièrement du premier type.

5. Procédé selon l'une des revendications précédentes, **caractérisé en ce que** le format XML (Extensible Markup Language) est utilisé comme format de données cible.

6. Procédé selon l'une des revendications précédentes, **caractérisé en ce que** les documents existant dans le format de données cible sont gérés par un serveur hypertexte et affichés dans un navigateur hypertexte, plus particulièrement **en ce que** les documents existant dans le format de données cible sont convertis au format HTML (Hypertext Markup Language), les documents HTML générés sont gérés par un serveur Web et affichés dans un navigateur Web.

7. Procédé selon l'une des revendications précédentes, **caractérisé en ce que** les éléments d'interrogation basés sur la logique sont définis comme questions standard prédéfinies et/ou sont formulés comme questions individuelles dans une langue d'interrogation prédéfinie.

8. Procédé selon la revendication 7, **caractérisé en ce qu'**un prologue est utilisé comme langue d'interrogation.

9. Procédé selon l'une des revendications précédentes, **caractérisé en ce qu'**une base de données orientée objet est utilisée comme base de données.

10. Système d'exploitation et de gestion de documents (10) existant sous forme électronique, plus particulièrement pour un procédé selon l'une quelconque des revendications précédentes, avec une structure serveur client, moyennant quoi le serveur (2) comprend :
- une interface (3) pour reprendre par le client des documents (10) d'un premier type existant dans un format de données source ou dans plusieurs formats de données source,
- une unité d'analyse et de conversion (14) pour analyser automatiquement le contenu source des documents (10) du premier type et pour convertir le contenu source dans un format de données cible uniforme, moyennant quoi, grâce à l'unité d'analyse et de conversion (14), des caractérisations automatiques peuvent être générées au moins pour une partie du contenu source des documents (10) du premier type selon les règles de description (11) caractéristiques du format de données source et ces caractérisations peuvent être mémorisées conjointement avec au moins une partie du contenu source dans un format de données cible comme documents (15) du deuxième type,
- une base de données (5) et une unité d'extraction (4) pour mémoriser ces caractérisations dans la base de données (5),
- et un système hypertexte (6, 9) pour afficher le contenu source enregistré dans les documents (15) du deuxième type, moyennant quoi au moins une partie du contenu source, pour laquelle des caractérisations ont été générées, peut être affichée comme hyperliens, les informations de déréférenciation des hyperliens peuvent être issues des caractérisations mémorisées dans la base de données (5), et des documents automatiques (17) d'un troisième type peuvent également être générés via des éléments d'interrogation basés sur la logique, documents qui peuvent être affichés via des systèmes hypertexte et comportent des hyperliens qui sont issus des caractérisations mémorisées dans la base de données.
